Europäisches Patentamt

European Patent Office

Office européen des brevets

(19)

(11) Numéro de publication : **0 058 102**
**B1**

(12) **FASCICULE DE BREVET EUROPÉEN**

(45) Date de publication du fascicule du brevet :
02.01.86

(51) Int. Cl.⁴ : **G 01 N 27/22**

(21) Numéro de dépôt : **82400072.3**

(22) Date de dépôt : **15.01.82**

(54) **Procédé de réalisation d'un hygromètre capacitif à diélectrique mince.**

(30) Priorité : **19.01.81 FR 8100890**

(43) Date de publication de la demande :
**18.08.82 Bulletin 82/33**

(45) Mention de la délivrance du brevet :
**02.01.86 Bulletin 86/01**

(84) Etats contractants désignés :
**CH DE FR GB IT LI NL**

(56) Documents cités :
**DE-B- 2 938 434**
**FR-A- 1 480 606**
**FR-A- 2 203 520**
**FR-A- 2 339 169**
**FR-A- 2 392 381**
**GB-A- 2 043 908**
**US-A- 3 802 268**
**IEEE-Trans CHMT-2, No. 3, Sept. 1979, p. 321-323**
**IEEE-Trans IECI-16, No. 1, July 1969, p. 6-12**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Lorin, André**
**1, Allée du Bois de la Cyprenne**
**F-91400 Orsay (FR)**
Inventeur : **Rosilio, André**
**64, Rue Velpeau**
**F-92160 Antony (FR)**
Inventeur : **Tanguy, Jean**
**107, Rue Bobillot**
**F-75013 Paris (FR)**

(74) Mandataire : **Mongrédien, André et al**
**c/o BREVATOME 25, rue de Ponthieu**
**F-75008 Paris (FR)**

EP 0 058 102 B1

## Description

La présente invention a pour objet un procédé de réalisation d'un hygromètre capacitif à diélectrique mince.

Il est connu pour mesurer l'humidité de l'air, d'utiliser les variations, en fonction de la quantité d'eau absorbée, de la constante diélectrique d'un matériau en couche mince constituant le diélectrique d'un condensateur.

Un certain nombre de dispositifs fonctionnant suivant ce principe existent déjà et ont été décrits dans la littérature. On peut citer les brevets US N° 3 168 829 (Nelson) et n° 3 350 941 (Misevich et Al), le brevet anglais n° 1 297 014, l'article de K.W. Misevich dans IEEE Trans. and Ind. Electronics and control Instrumentation, vol. IECI 16, n° 1, juillet 1969, pages 6 à 12, le brevet finlandais FI-A-2 831 72 de la Société Vaisala, le brevet français FR-A-2 203 520 de la même société, correspondant français du précédent, le brevet français FR-A-2 339 169 du Commissariat à l'Energie Atomique (Barraud, Messier, Rosilio), l'article de E. Salasma, P. Kestamo de la Société Vaisala (3e symp. on Meteorological Observations, Fev. 1973, Washington pages 33 à 38, l'article de P.E. Thoma, J.O. Colla and R. Stewart dans IEEE trans on Compt Hybrids and Manufact. Technology vol. CHMT n° 3 sept. 79, pages 321 à 323 et enfin le brevet de P.E. THOMA US-A-3 802 268 (1974).

Ces différents capteurs d'humidité peuvent se classer en deux catégories. La première catégorie (Misevich, Nelson, Thoma) est caractérisée par le fait que le matériau diélectrique est constitué d'une feuille de polymère qui sert à la fois d'élément sensible et de support mécanique au capteur. Ceci entraîne un certain nombre d'inconvénients pour ce type d'hygromètre : faible résistance mécanique, déformation du polymère entraînant un effet d'hystérésis notable et un certain coefficient de température.

Les capteurs de la seconde catégorie sont formés d'une couche de polymère (Vaisala) ou d'autres molécules sensibles à l'eau (Barraud et Al) déposées sur un substrat solide métallisé formant la première électrode d'un condensateur. Ainsi, le support mécanique de l'hygromètre, généralement du verre ou un autre matériau inerte à l'humidité, est bien distinct de la couche sensible à l'eau.

Cette disposition permet de s'affranchir des défauts de la première catégorie (fragilité mécanique, hystérésis, réponse lente, coefficient de température), mais la deuxième électrode du condensateur doit être très mince afin d'être perméable à l'eau, ce qui nécessite certaines précautions lors de la fabrication et entraîne une certaine fragilité du capteur. D'autre part, la minceur de cette électrode la rend sensible à la pollution, ce qui diminue la durée de vie du dispositif. Enfin, le dépôt du film de polymère est une opération délicate car celui-ci doit être exempt de défauts ou de trous pour éviter tout risque de court-circuit entre les électrodes.

Cependant, pour éviter ce risque, on a intérêt à placer une mince couche isolante insensible à l'eau entre la première électrode et la couche de polymère : on évite les courts-circuits en cas de perforation du diélectrique sans modifier la sensibilité du capteur car la couche isolante a une capacité importante.

Le document DE-B-2 938 434 décrit un hygromètre capacitif dans lequel le diélectrique est rendu sensible à l'eau par bombardement ionique. Dans une variante, les deux électrodes se font face et sont séparées par le diélectrique, l'une étant sur un support et l'autre exposée à l'humidité. Cependant, l'électrode exposée est très mince et cet hygromètre présente les défauts mentionnés ci-dessus.

La présente invention a justement pour objet un procédé de réalisation d'un hygromètre capacitif qui élimine ces inconvénients en permettant d'utiliser comme électrode perméable à l'eau une couche métallique suffisamment épaisse pour présenter une bonne résistance mécanique.

Le procédé objet de l'invention est défini dans la revendication 1.

La température de ramollissement du diélectrique est généralement proche de sa température de fusion. Ce traitement provoque une modification de la structure du matériau constituant le diélectrique, ce qui entraîne une déformation permanente de la deuxième électrode : celle-ci prend une structure granuleuse avec des grains dont les dimensions sont de l'ordre du micron. On obtient ainsi une bonne porosité de la couche métallique qui devient perméable à la vapeur d'eau tout en gardant une bonne tenue mécanique, et notamment une bonne tenue mécanique vis-à-vis des variations brusques de température.

Les caractéristiques et avantages de l'invention ressortiront à la lecture de la description qui va suivre, donnée à titre d'exemple purement illustratif et nullement limitatif, en référence aux dessins annexés dans lesquels :

la figure 1 représente une vue schématique, en perspective, d'un hygromètre capacitif tels que ceux obtenus par le procédé selon l'invention,

la figure 2 représente une vue schématique, en perspective, illustrant un mode de mise en œuvre du procédé selon l'invention,

la figure 3 est une vue de dessus schématique montrant comment on peut réaliser quatre capteurs à partir d'une seule plaquette, et

la figure 4 est une vue de dessus schématique montrant comment on peut réaliser 16 capteurs à partir d'une seule plaquette.

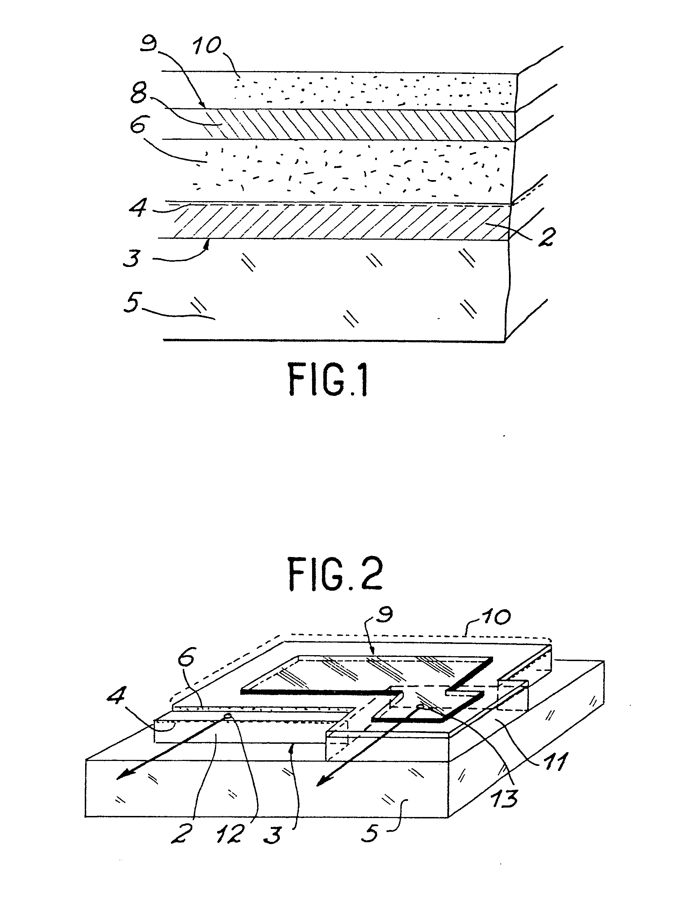

Sur la figure 1, on voit un substrat métallique 2 qui constitue la première électrode 3 d'un hygromètre capacitif. Dans l'exemple représenté ici, cette électrode 3 est en aluminium et repose sur un support rigide 5, par exemple une plaque de verre mais on peut utiliser une couche conductrice relativement épaisse, par exemple une couche de silicium, qui constitue elle-même un support rigide.

Dans la plupart des cas, l'une des faces 4 de la première électrode est oxydée sur une profondeur de 50 à 200 Å environ et cette face est en contact avec une couche 6 d'un matériau isolant qui constitue le diélectrique du condensateur et dont la constante diélectrique varie en fonction de la quantité d'eau absorbée.

L'avantage obtenu avec un diélectrique formé de deux parties superposées, l'une insensible à l'eau et d'épaisseur très mince (de 50 à 200 Å) d'oxyde d'aluminium ou d'oxyde de silicium par exemple, l'autre d'épaisseur plus importante (500 à 2 000 Å) et sensible à l'humidité est d'obtenir une protection très efficace contre les courts-circuits éventuels de la couche sensible à l'eau. La capacité de la couche d'oxyde étant très grande, sa mise en série avec celle du diélectrique actif ne diminue pratiquement pas la sensibilité du capteur. On peut donc ainsi former des capteurs à temps de réponse court avec une grande capacité spécifique, bien protégés des courts-circuits par la couche d'oxyde. La capacité spécifique de tels capteurs est de l'ordre de 10 à 20 nF/cm², c'est-à-dire supérieure à celle de la plupart des hygromètres capacitifs utilisés à ce jour.

Comme matériau isolant dont la constante diélectrique varie en fonction de la quantité d'eau absorbée, on peut utiliser un polymère naturellement sensible à l'eau, tel que les esters de cellulose, l'acétate-butyrate de cellulose ou le polyvinyl acétate. On peut encore utiliser des polymères pouvant prendre une structure réticulée sous l'effet de la température ou d'un rayonnement ultraviolet, tels que l'acétocrotonate de cellulose ou l'acéto-butyro-crotonate de cellulose. On obtient ainsi des hygromètres particulièrement résistant à la chaleur et aux agents chimiques (acides, solvants, agents polluants, ...).

On peut également utiliser une superposition de couches monomoléculaires d'une substance organique déposées suivant la méthode dite « de Langmuir et Blodgett », lesdites couches étant ensuite rendues sensibles à l'eau par un traitement approprié.

Sur la figure 1, on voit encore une couche métallique 8 qui constitue la deuxième électrode 9. Celle-ci est de préférence constituée par un métal peu oxydable tel que l'or, déposé en couche relativement épaisse (plus de 200 Å) et rendu perméable à l'eau par un traitement ultérieur.

L'hygromètre peut éventuellement comporter une ou plusieurs couches monomoléculaires d'une substance organique 10 qui protège l'électrode perméable contre la corrosion, mais la présence de ces couches monomoléculaires n'est pas indispensable.

La figure 2 illustre un mode de mise en œuvre du procédé objet de l'invention. Sur un support en verre 5, on dépose, par exemple par évaporation sous vide, une couche d'aluminium 2 qui constitue la première électrode 3. On dépose ensuite en 11, à côté de la couche 2, un bloc isolant, par exemple en oxyde de silicium. Dans l'exemple de la figure 2, l'un des angles de l'électrode 3 a été entaillé afin que le bloc isolant 11 puisse être placé dans l'entaille et en contact avec l'électrode 3. De plus, le bloc 11 a une épaisseur sensiblement égale à celle de l'électrode 3 afin qu'on puisse déposer le matériau diélectrique 6 sur la surface plane formée par l'électrode 2 et le bloc 11. Le rôle de celui-ci sera exposé plus loin au cours de la présente description. A ce stade de la fabrication, la couche d'aluminium est soumise à un traitement d'oxydation anodique afin de former la couche mince d'alumine 4.

L'étape suivante consiste à déposer la couche de matériau isolant sensible à l'eau 6. Dans le cas où l'on utilise un polymère (acétate-butyrate de cellulose par exemple) on peut procéder par trempage du substrat métallique oxydé dans une solution du polymère et d'un solvant puis par séchage. On obtient ainsi une couche de 1 000 à 2 000 Å d'épaisseur.

Dans le cas où le diélectrique est constitué par des couches monomoléculaires organiques, celles-ci sont déposées par la méthode dite « de Langmuir et Blodgett », et l'épaisseur de la couche contenue est de l'ordre de 500 Å environ. Une substance organique telle que le stéarate de calcium convient très bien pour cet usage. Cependant, le diélectrique ainsi obtenu n'est pas naturellement perméable à l'eau et il faut le perméabiliser par un traitement spécial qui peut être un traitement d'irradiation aux rayons gamma ou aux électrons. Dans une forme préférée de réalisation, on utilise les rayons gamma issus d'une source de Cobalt 60. La dose absorbée est de l'ordre de 40 Mrads, et en tout cas supérieure à 20 Mrads, cette dose étant absorbée pendant une durée supérieure à 1 heure.

L'étape suivante consiste à réaliser la deuxième électrode 9 qui peut être une couche d'or d'épaisseur supérieure à 200 Å, déposée par tout moyen connu et notamment par métallisation sous vide. De par son épaisseur, cette couche d'or n'est pas perméable à l'eau. Selon une caractéristique de l'invention, on la rend perméable en soumettant le capteur à un traitement thermique à une température voisine de la température de ramollissement du diélectrique. La plupart des matériaux utilisés pour former la couche diélectrique ont des températures de ramollissement comprises entre 150 et 250 °C, c'est-à-dire voisines de leur température de fusion. Il suffit de soumettre l'hygromètre pendant quelques minutes à cette température en atmosphère normale, le condensateur étant hors tension, pour obtenir un changement de structure du diélectrique qui entraîne une déformation permanente de la couche d'or. Celle-ci prend une structure granuleuse avec des grains dont les dimensions sont comprises entre 0,1 et 5 microns et généralement voisines de 1 micron. Ces grains et ces porosités sont visibles au microscope (optique et électronique), et montrent que l'hygromètre a bien été réalisé par le procédé selon l'invention.

Eventuellement, on réalise ensuite la couche de protection de la deuxième électrode qui se présente sous la forme d'une ou plusieurs couches monomoléculaires d'une substance organique déposée par la méthode de Langmuir et Blodgett.

On termine le capteur par la réalisation des contacts électriques avec les deux électrodes 3 et 9. Sur la figure 2, on voit que la couche diélectrique 6 ne recouvre pas entièrement l'électrode 3, ce qui permet de souder directement le premier contact 12 sur la partie découverte de l'électrode 3 en perçant la couche d'oxyde superficielle 4. Quant à l'électrode perméable 9, elle s'étend sur la couche 6 à la fois au-dessus de la première électrode 3 et au-dessus du bloc isolant 11. C'est sur la partie de l'électrode 9 située au-dessus du bloc 11 qu'on soude le deuxième contact électrique 13.

On peut également utiliser d'autres méthodes pour la réalisation des contacts électriques. Dans le cas où la première électrode est une couche métallique déposée sur un substrat en verre et où le diélectrique est un polymère à bas point de fusion (température de fusion inférieure à 250 °C) les contacts peuvent être soudés à travers le polymère. C'est ainsi que la couche diélectrique 6 peut recouvrir entièrement la première électrode 3 puisque le polymère fond lorsqu'on soude le premier contact 12 et que le deuxième contact 13 peut être soudé à cheval sur la deuxième électrode 9 et le bloc isolant 11. Si on utilise un polymère à haut point de fusion (température de fusion supérieure à 300 °C) le deuxième contact 13 est soudé sur l'électrode 9, comme illustré sur la figure 2, mais il faut éliminer le polymère, par exemple par gravure, avant de souder le premier contact 12.

Si on utilise comme première électrode un bloc de silicium, le premier contact est pris directement sur le substrat conducteur sans soudure. Dans ce cas, si le polymère est à point de fusion élevé, on peut supprimer le bloc isolant 11 et souder le deuxième contact sur l'électrode supérieure 9. Si le polymère est à bas point de fusion, on soude le deuxième contact à cheval sur l'électrode perméable et un bloc isolant.

L'utilisation d'un substrat de silicium permet l'économie d'une soudure pour l'un des contacts et simplifie donc la réalisation de l'appareil. Elle permet aussi une miniaturisation plus poussée de l'hygromètre.

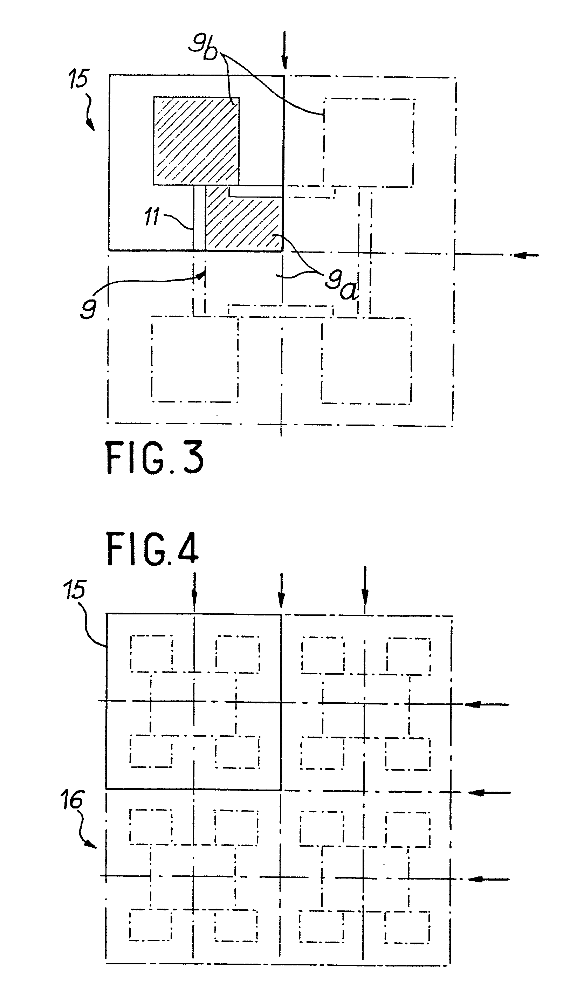

La figure 3 montre une disposition permettant de réaliser plusieurs hygromètres à partir d'un élément 15 que l'on découpe suivant les flèches. On dépose la première électrode comme si l'élément 15 constituait un seul capteur, mais le bloc isolant 11 est placé au centre de l'élément 15 de manière à s'étendre sur chacun des capteurs qui seront obtenus après découpe (quatre dans l'exemple décrit ici). Quant à la deuxième électrode 9, elle présente une partie 9a s'étendant sur la plus grande partie du bloc 11 et des parties 9b correspondant à chacun des hygromètres.

La figure 4 illustre une méthode permettant de fabriquer un grand nombre de capteurs à partir d'un support 16 dans lequel on réalise plusieurs éléments tels que l'élément 15 décrit en référence à la figure 3.

Le procédé selon l'invention présente de nombreux avantages. Tout d'abord, le fait que la deuxième électrode soit constituée par une couche métallique épaisse rendue perméable à l'eau par un traitement approprié élimine tous les inconvénients des électrodes minces en facilitant le processus de fabrication et en rendant l'électrode moins sensible à la pollution, ce qui augmente la durée de vie du capteur. D'autre part, la présence sur la première électrode d'une couche d'oxyde qui constitue un deuxième diélectrique en série avec le matériau isolant sensible à l'eau évite les courts-circuits entre les électrodes, permet d'utiliser une épaisseur très faible de ce matériau sensible à l'eau et confère à l'ensemble une grande capacité spécifique, ce qui permet une bonne liaison avec les moyens de mesure de la constante diélectrique. Enfin, la présence d'un diélectrique mince confère au capteur une grande rapidité de réponse : un essai normalisé (à 63 % de l'amplitude maximale pour 100 % d'humidité) a donné un temps de réponse inférieure à 0,5 sec. alors que ce temps est de l'ordre de plusieurs secondes pour les hygromètres classiques actuels.

Il est bien entendu que l'invention ne se limite pas aux seuls exemples qui viennent d'être décrits mais qu'on peut envisager des variantes sans sortir pour autant du cadre de l'invention. C'est ainsi que l'électrode perméable peut être réalisée en or ou en un autre métal peu oxydable tel que le chrome ou le nickel. On peut aussi utiliser plusieurs couches de métaux différents choisis parmi les métaux précités par exemple une couche de nickel recouverte d'or ou une couche triple chrome-nickel-or.

Quant aux applications, elles ne se limitent pas à la seule mesure du degré hygrométrique de l'air : les capteurs obtenus par le procédé selon l'invention peuvent être utilisés pour mesurer toute grandeur dont la variation entraîne une variation de la constante diélectrique du matériau isolant.

## Revendications

1. Procédé de réalisation d'un hygromètre capacitif à diélectrique mince, du genre de ceux dans lesquels on dépose sur une couche d'un matériau conducteur formant une première électrode (3), une couche (6) d'un matériau diélectrique isolant dont la constante diélectrique varie avec la quantité d'eau absorbée, puis, sur cette couche (6) de matériau diélectrique, une couche métallique (8) d'un métal peu oxydable formant une deuxième électrode (9) que l'on rend perméable à l'eau et dans lesquels on réalise un premier et un deuxième contacts électriques avec la première et la deuxième électrodes respectivement, caractérisé en ce que pour réaliser cette deuxième électrode (9) on dépose sur la couche de matériau diélectrique (6) au moins une couche (8) d'épaisseur supérieure à 200 Å du métal peu oxydable que l'on soumet ensuite à un traitement thermique à une température voisine de la température de ramollissement de la matière constituant la couche de matériau diélectrique (6) afin de la rendre perméable à l'eau.

2. Procédé selon la revendication 1, caractérisé en ce qu'on utilise, pour réaliser la couche (8) formant la deuxième électrode, un métal choisi dans le groupe comprenant l'or, le nickel et le chrome.

3. Procédé selon la revendication 1, caractérisé en ce que pour réaliser la deuxième électrode (9), on dépose plusieurs couches de métaux différents choisis dans le groupe comprenant l'or, le nickel et le chrome.

4. Procédé selon l'une quelconque des revendications 1 à 3, caractérisé en ce qu'on soumet une couche métallique formant la première électrode (3) à un traitement d'oxydation afin de former une couche d'oxyde (4) sur la face de cette électrode qui doit être en contact avec la couche de matériau diélectrique (6).

5. Procédé selon l'une quelconque des revendications 1 à 4, caractérisé en ce qu'on dépose la première électrode (3) sur un support isolant rigide (5).

6. Procédé selon les revendications 5 et 4, caractérisé en ce qu'il comprend les étapes suivantes :

— sur le support rigide (5), on dépose la couche métallique (2) formant la première électrode et, à côté de celle-ci, un bloc isolant (11) d'épaisseur sensiblement à celle de cette couche métallique (2) ;

— on dépose le matériau diélectrique (6) à la fois sur la couche métallique (2) formant la première électrode et sur le bloc isolant (11) ;

— on dépose la couche métallique (8) formant la deuxième électrode sur la couche de matériau diélectrique (6), et

— on réalise le premier et le deuxième contacts électriques (12, 13) avec la première (3) et la deuxième (9) électrodes respectivement.

7. Procédé selon l'une quelconque des revendications 5 ou 6, caractérisé en ce qu'on utilise pour former la couche de matériau diélectrique (6) un polymère dont le point de fusion est inférieur ou égal à 250 °C.

8. Procédé selon la revendication 7, caractérisé en ce qu'on donne à la deuxième électrode (9) une forme telle qu'elle s'étende partiellement au-dessus du bloc isolant (11) et ne recouvre que partiellement la première électrode (3), le deuxième contact électrique (13) étant soudé à cheval sur la deuxième électrode (9) et le bloc isolant (11) tandis que le premier contact électrique est soudé sur la première électrode également à travers le polymère.

9. Procédé selon l'une quelconque des revendications 5 ou 6, caractérisé en ce qu'on utilise pour former la couche de matériau diélectrique (6), un polymère dont le point de fusion est supérieur ou égal à 300 °C.

10. Procédé selon les revendications 9 et 6, caractérisé en ce qu'on donne à la deuxième électrode (9) une forme telle qu'elle s'étende partiellement au-dessus du bloc isolant (11) et ne recouvre que partiellement la première électrode (3), le deuxième contact électrique (13) étant soudé sur le métal constituant la deuxième électrode (9) et le premier contact électrique (12) étant soudé sur la première électrode (3) après gravure du polymère.

11. Procédé selon l'une quelconque des revendications 1 à 4, caractérisé en ce qu'on donne à la couche conductrice formant la première électrode (3) une épaisseur suffisante pour qu'elle forme elle-même un support rigide.

12. Procédé selon la revendication 11, caractérisé en ce qu'on utilise, pour former la première électrode (3), une couche de silicium.

13. Procédé selon l'une quelconque des revendications 11 ou 12, caractérisé en ce qu'on utilise, pour former la couche de matériau diélectrique (6), un polymère dont le point de fusion est inférieur ou égal à 250 °C ;

14. Procédé selon la revendication 13, caractérisé en ce qu'il comprend les étapes suivantes :

— on dispose, au contact du support formant la première électrode (3), un bloc isolant (11) ;

— on dépose la couche de matériau diélectrique (6) à la fois sur le support (3) et le bloc isolant (11) ;

— on dépose la couche métallique formant la deuxième électrode (9) sur la couche de matériau diélectrique (6) de sorte qu'elle ne recouvre que partiellement le bloc isolant (11), et

— on soude le deuxième contact électrique (13) à cheval sur la deuxième électrode (9) et le bloc isolant (11), le premier contact étant pris directement sur le support (3).

15. Procédé selon l'une quelconque des revendications 11 ou 12, caractérisé en ce qu'on utilise, pour former la couche de matériau diélectrique (6), un polymère dont le point de fusion est supérieur ou égal à 300 °C.

16. Procédé selon la revendication 15, caractérisé en ce qu'on soude le deuxième contact électrique (13) sur la deuxième électrode (9), tandis que le premier contact est pris directement sur la première électrode (3).

17. Procédé selon l'une quelconque des revendications 1 à 16, caractérisé en ce qu'on utilise pour former la couche diélectrique (6) un polymère pouvant prendre une structure réticulée sous l'action de la chaleur ou d'un rayonnement ultraviolet.

18. Procédé selon la revendication 17, caractérisé en ce que le matériau diélectrique est choisi dans le groupe comprenant l'acétocrotonate de cellulose et l'acéto-butyro-crotonate de cellulose.

19. Procédé selon l'une quelconque des revendications 1 à 8, caractérisé en ce qu'on réalise quatre hygromètres à partir d'un seul élément que l'on découpe après avoir déposé la couche métallique (8) formant la deuxième électrode de sorte qu'elle s'étende à la fois sur les quatre hygromètres découpés dans l'élément (15).

20. Procédé selon la revendication 19, caractérisé en ce qu'on réalise un grand nombre d'hygromètres à partir d'un seul support que l'on découpe pour obtenir des éléments conformes à la revendication 19.

**Claims**

1. Process for the production of a thin dielectric capacitive hygrometer, of the type in which a layer (6) of an insulating dielectric material whose dielectric constant varies with the quantity of absorbed water is deposited on a layer of a conductive material constituting a first electrode (3), and then, on said layer (6) of dielectric material, there is deposited a metallic layer (8) of an oxidation-resistant metal constituting a second electrode (9), which is rendered permeable to water and in which a first and a second electric contact are formed with the first and the second electrodes respectively, characterised in that, to form said second electrode (9), at least one layer (8) of oxidation resistant metal having a thickness greater than 200 Å is deposited and subsequently subjected to heat treatment at a temperature near the softening temperature of the substance constituting the layer of dielectric material (6) whereby to make it permeable to water.

2. Process according to claim 1, characterised in that a metal selected from the group comprising gold, nickel and chromium is used to form the layer (8) constituting the second electrode.

3. Process according to claim 1, characterised in that a plurality of layers of different metals selected from the group comprising gold, nickel and chromium, are deposited to constitute the second electrode (9).

4. A process according to any one of claims 1 to 3, characterised in that a metal layer constituting the first electrode (3) is subjected to an oxidation treatment whereby to form a layer of oxide (4) on that surface of said electrode which is to be in contact with the layer of dielectric material (6).

5. Process according to any one of claims 1 to 4, characterised in that the first electrode (3) is deposited on an insulating rigid support (5).

6. Process according to claims 5 and 4, characterised in that it comprises the following steps :
— the metallic layer (2) is deposited on the rigid support (5) to form the first electrode, and an insulating block (11) having a thickness substantially equal to that of said metal layer (2), is deposited beside it ;
— the dielectric material (6) is simultaneously deposited on the metal layer (2) constituting the first electrode and on the insulating block (11) ;
— the metal layer (8) constituting the second electrode is deposited on the layer of dielectric material (6) ; and
— the first and the second electric contacts (12, 13) are provided on the first (3) and second electrodes (9) respectively.

7. Process according to either of claims 5 or 6, characterised in that a polymer whose fusion temperature is below or equal to 250 °C is employed to form the layer of dielectric material (6).

8. Process according to claim 7, characterised in that the second electrode (9) is provided with a form such that is extends partially above the insulating block (11) and only partially covers the first electrode (3), the second electric contact (13) being welded to the second electrode (9) across the insulating block (11), while the first electric contact is welded to the first electrode, also across the polymer.

9. Process according to either of claims 5 or 6, characterised in that a polymer whose fusion temperature is greater than or equal to 300 °C is used to form the layer of dielectric material (6).

10. Process according to claims 9 and 6, characterised in that the second electrode (9) has a form such that it extends partially above the insulating block (11) and only partially covers the first electrode (3), the second electric contact (13) being welded to the metal constituting the second electrode (9), and the first electric contact (22) being welded to the first electrode (3) after etching the polymer.

11. Process according to any one of claims 1 to 4, characterised in that the conductive layer constituting the first electrode has a thickness sufficient that it provides a rigid support by itself.

12. Process according to claim 11, characterised in that a silicon layer is employed to form the first electrode (3).

13. Process according to either of claims 11 or 12, characterised in that a polymer whose fusion temperature is below or equal to 250 °C is employed to form the layer of dielectric material (6).

14. Process according to claim 13, characterised in that it comprises the following steps :
— an insulating block (11) is placed in contact with the support constituting the first electrode (3) ;
— the layer of dielectric material (6) is deposited simultaneously on the support (3) and the insulating block (11) ;
— the metal layer constituting the second electrode (9) is deposited on the layer of dielectric material (6) whereby it covers only partially the insulating block (11) ; and
— the second electric contact (13) is welded to the second electrode (9) across the insulating block (11), the first contact being formed directly on the support (3).

15. Process according to either of claims 11 or 12, characterised in that a polymer whose fusion temperature is above or equal to 300 °C is employed to form the layer of dielectric material (6).

16. Process according to claim 15, characterised in that the second electric contact (13) is welded to the second electrode (9), while the first contact is formed directly on the first electrode (3).

17. Process according to any one of claims 1 to 16, characterised in that a polymer cross-linkable under the influence of heat or ultra violet radiation is employed to form the dielectric layer (6).

18. Process according to claim 17, characterised in that the dielectric material selected from the group comprising cellulose acetocrotonate and cellulose aceto-butyro-crotonate.

19. Process according to any one of claims 1 to 8, characterised in that four hygrometers are formed from a single element by cutting after depositing the metal layer (8) constituting the second electrode so that it extends simultaneously over the four hygrometers to be cut from element (15).

20. Process according to claim 19, characterised in that a large number of hygrometers are formed from a single support which is cut to obtain elements according to claim 19.

**Patentansprüche**

1. Verfahren zur Herstellung eines kapazitiven Feuchtigkeitsfühlers mit dünnem Dielektikum derart, bei denen man auf eine Unterlage aus einem Leitermaterial, die eine erste Elektrode (3) bildet, eine Schicht aus einem isolierenden, dielektrischen Material anordnet, dessen Dielektrizitätskonstante mit der Menge des absorbierten Wassers variiert, dann auf dieser Schicht (6) aus dielektrischem Material eine Metallschicht (8) aus einem wenig oxydierbaren Material anordnet, die eine zweite Elektrode (9) bildet, die man wasserdurchlässig macht, und bei welchen man einen ersten und einen zweiten elektrischen Kontakt mit der ersten bzw. zweiten Elektrode herstellt, dadurch gekennzeichnet, daß zur Ausbildung der zweiten Elektrode (9) man auf der Schicht des dielektrischen Materials (6) wenigstens eine Schicht (8) eines wenig oxydierbaren Materials einer Dicke von mehr als 200 Å anordnet, die man anschließend einer thermischen Behandlung mit einer Temperatur unterwirft, die nahe bei der Erweichungstemperatur des Materials liegt, die die Schicht (6) aus dielektrischem Material bildet, um sie wasserdurchlässig zu machen.

2. Verfahren nach Anspruch 1, dadurch gekennzeichnet, daß zur Ausbildung der Schicht (8), die die zweite Elektrode bildet, man ein Material verwendet, das aus der Gruppe, die Gold, Nickel und Chrom enthält, auswählt.

3. Verfahren nach Anspruch 1, dadurch gekennzeichnet, daß man zur Ausbildung der zweiten Elektrode (9) mehrere Schichten aus unterschiedlichen Metallen aufbringt, die aus der Gruppe, die Gold, Nickel und Chrom enthält, ausgewählt sind.

4. Verfahren nach einem der Ansprüche 1 bis 3, dadurch gekennzeichnet, daß man die Metallschicht, die die erste Elektrode (3) bildet, einer Oxydationsbehandlung unterwirft, um eine Oxydschicht (4) auf der Seite dieser Elektrode auszubilden, die in Kontakt mit der Schicht aus dielektrischem Material (6) treten soll.

5. Verfahren nach einem der Ansprüche 1 bis 4, dadurch gekennzeichnet, daß man die erste Elektrode (3) auf einem festen isolierenden Substrat (5) anordnet.

6. Verfahren nach den Ansprüchen 4 und 5, dadurch gekennzeichnet, daß es folgende Schritte umfaßt :

— auf dem festen Substrat (5) ordnet man die metallische Schicht (2) an, die die erste Elektrode bildet, und auf der Seite derselben einen Isolierkörper (11) einer Dicke, die im wesentlichen gleich der Dicke der metallischen Schicht (2) ist ;

— man ordnet das dielektrische Material (6) zugleich auf der metallischen Schicht (2), die die erste Elektrode bildet, und den isolierenden Block (11) an ;

— man ordnet die metallische Schicht (8), die die zweite Elektrode bildet, auf der Schicht aus dielektrischem Material (6) an, und

— man bringt die ersten und zweiten elektrischen Kontakte (12, 13) an der ersten (3) bzw. der zweiten (9) Elektrode an.

7. Verfahren nach einem der Ansprüche 5 oder 6, dadurch gekennzeichnet, daß man zur Ausbildung der Schicht aus dielektrischem Material (6) ein Polymer verwendet, dessen Schmelzpunkt unterhalb oder bei 250 °C liegt.

8. Verfahren nach Anspruch 7, dadurch gekennzeichnet, daß man der zweiten Elektrode (9) eine Form gibt derart, daß sie sich teilweise über dem isolierenden Block (11) erstreckt und nur teilweise die erste Elektrode (3) bedeckt, wobei der zweite elektrische Kontakt (13) quer über die zweite Elektrode (9) und den isolierenden Block (11) gelötet wird, während der erste elektrische Kontakt auf die erste Elektrode ebenfalls über das Polymer gelötet wird.

9. Verfahren nach einem der Ansprüche 5 oder 6, dadurch gekennzeichnet, daß man zur Ausbildung der Schicht aus dielektrischem Material (6) ein Polymer verwendet, dessen Schmelzpunkt oberhalb oder bei 300 °C liegt.

10. Verfahren nach den Ansprüchen 9 und 6, dadurch gekennzeichnet, daß man der zweiten Elektrode (9) eine solche Form gibt, daß sie sich teilweise über den isolierenden Block (11) erstreckt und nur teilweise die erste Elektrode (3) bedeckt, wobei der zweite elektrische Kontakt (13) auf das Metall gelötet ist, das die zweite Elektrode (9) bildet, und der erste elektrische Kontakt (12) auf die erste Elektrode (3) nach Einschneiden des Polymers gelötet wird.

11. Verfahren nach einem der Ansprüche 1 bis 4, dadurch gekennzeichnet, daß man der leitfähigen Schicht, die die erste Elektrode (3) bildet, eine ausreichende Dicke gibt, daß sie einen steifen Träger bildet.

12. Verfahren nach Anspruch 11, dadurch gekennzeichnet, daß man zur Ausbildung der ersten Elektrode (3) eine Schicht aus Silicium verwendet.

13. Verfahren nach einem der Ansprüche 11 oder 12, dadurch gekennzeichnet, daß man zur Ausbildung der Schicht aus dielektrischem Material (6) ein Polymer verwendet, dessen Schmelzpunkt unterhalb oder bei 250 °C liegt.

14. Verfahren nach Anspruch 13, dadurch gekennzeichnet, daß es die folgenden Schritte umfaßt :

— man ordnet, in Kontakt mit dem Substrat, das die erste Elektrode (3) bildet, einen isolierenden Block (11) an ;

— man ordnet die Schicht aus dielektrischem Material (6) zugleich auf dem Substrat (3) und den isolierenden Block (11) an ;

— man ordnet die metallische Schicht, die die zweite Elektrode (9) bildet, auf der Schicht aus dielektrischem Material (6) so an, daß sie nur teilweise den isolierenden Block (11) bedeckt, und

— man lötet den zweiten elektrischen Kontakt (13) quer über die zweite Elektrode (9) und den isolierenden Block (11), wobei der erste Kontakt direkt an dem Substrat (3) vorgenommen wird.

15. Verfahren nach einem der Ansprüche 11 oder 12, dadurch gekennzeichnet, daß man zur Ausbildung der Schicht aus dielektrischem Material (6) eine Polymer verwendet, dessen Schmelzpunkt oberhalb oder bei 300 °C liegt.

16. Verfahren nach Anspruch 15, dadurch gekennzeichnet, daß man den zweiten elektrischen Kontakt (13) auf die zweite Elektrode (9) lötet, während der erste Kontakt direkt auf der ersten Elektrode (3) vorgenommen wird.

17. Verfahren nach einem der Ansprüche 1 bis 16, dadurch gekennzeichnet, daß man zur Ausbildung der dielektrischen Schicht (6) ein Polymer verwendet, das eine netzartige Struktur unter der Wirkung von Wärme oder Ultraviolettbestrahlung annehmen kann.

18. Verfahren nach Anspruch 17, dadurch gekennzeichnet, daß das dielektrische Material aus der Gruppe ausgewählt ist, die Zellulose-Acetocrotonat und Zellulose-Acetobutyrocrotonat enthält.

19. Verfahren nach einem der Ansprüche 1 bis 8, dadurch gekennzeichnet, daß man vier Hygrometer von einem einzigen Element ausgehend herstellt, das man verteilt, nachdem man die metallische Schicht (8), die die zweite Elektrode ausbildet, aufgebracht hat, so daß sie sich zugleich über die vier aus dem Element (15) geteilten Hygrometer erstreckt.

20. Verfahren nach Anspruch 19, dadurch gekennzeichnet, daß man eine große Zahl von Hygrometern von einem einzigen Substrat ausgehend herstellt, das man verteilt, um die Elemente nach Anspruch 19 zu erhalten.

**FIG.1**

**FIG.2**

FIG.3

FIG.4